# EUROPEAN PATENT APPLICATION

(11) **EP 4 661 101 A1**
(43) Date of publication of application: **10.12.2025**
(21) Application number: 25759573.6
(22) Date of filing: 19.03.2025
(51) Int. Cl.: H01M 4/36, H01M 4/38, H01M 4/62, H01M 4/134, H01M 10/052, H01M 4/02

(54) **SILICON COMPOSITE FOR ANODE MATERIAL, PREPARING METHOD THEREFOR, ANODE COMPRISING SAME FOR SECONDARY BATTERY, AND SECONDARY BATTERY COMPRISING SAME**

(30) Priority: 21.03.2024 KR 20240039229
(71) Applicant: G.I.Tech Co., Ltd., Asan-Si Chungcheongnam-do 31408 (KR)
(72) Inventor: KIM, Kang Hyung, Ansan-si, Gyeonggi-do 15595 (KR)
(74) Representative: Aseglio-Gianinet, Romina
(86) International application number: PCT/KR2025/099845
(87) International publication number: WO 2025/198457

(57) **Abstract**

According to various embodiments of the present invention, a silicon composite may include: pure silicon grains; and a buffer layer coated on the surface of the pure silicon grains. A method for manufacturing the silicon composite according to various embodiments of the present invention may include: a step of pulverizing metallurgical-grade silicon particles; and a step of forming a buffer layer layer on the surface of the pulverized metallurgical-grade silicon grains. An anode for a secondary battery according to various embodiments of the present invention may include the silicon composite. A secondary battery according to various embodiments of the present invention may include the anode.

## Description

### Technical Field

Various embodiments of the present disclosure relate to a silicon composite for anode material, a manufacturing method therefor, an anode including same for a secondary battery, and a secondary battery including same. More specifically, the present disclosure relates to a silicon composite having a buffer layer that can be used in lithium secondary batteries, a method for manufacturing same, an anode including same for a secondary battery, and a secondary battery including same.

### Background Art

One of the recent major issues in the field of electrochemistry is the improvement of performance related to driving range and charging speed of electric vehicles. In lithium secondary batteries commonly used in electric vehicles, the graphite anode has a low capacity, resulting in a short driving range. To address this issue, researchers have examined various alternatives and have concluded that pure silicon anode materials are a potential game-changer for secondary batteries. Silicon is one of the most abundant elements on Earth, accounting for over 25% of the Earth's crust, second only to oxygen. Compared to conventional graphite anode materials, silicon offers nearly ten times higher theoretical capacity and has a similar specific gravity with 2.33 for silicon vs. 2.25 for graphite, so that silicon is suitable for secondary batteries in electric vehicles by satisfying cost, capacity, and lightweight requirements. Among various silicon sources, metallurgical-grade silicon is produced by melting quartz sand at high temperatures with a carbon-based reducing agent, tapping the molten silicon, and then crushing the solidified ingot. Metallurgical-grade silicon, which is already widely used as a raw material in industrial fields such as silicon ingots used in semiconductors and solar cells, and steel and aluminum alloys, is easy to obtain.

However, when various forms of silicon anode materials, including particles, rods, flakes, hollow shapes, and porous materials, were applied to lithium secondary batteries, a rapid capacity degradation was observed after only a few charge/discharge cycles, resulting in lower performance than graphite. (in the present disclosure, the terms particles, rods, flakes, and porous types refer to materials with an aspect ratio where the thickness and diameter are equivalent, and are used as shape-independent expressions.)

The cause of the capacity degradation in silicon anode materials has been elucidated through the efforts of many researchers. While graphite expands by up to 15 % upon lithiation, silicon forms LiₓSi phases such as LiSi, Li_{1.7}Si, Li₂Si, Li_{2.3}Si, Li_{2.8}Si, Li_{3.25}Si, Li_{3.75}Si, Li_{4.4}Si, and the like during lithiation reactions. These phases can cause silicon to expand by more than 300 % of its original volume due to its continuous reaction with lithium and fluorine during charge/discharge cycles. This volumetric expansion acts as a tensile stress on the surface of the silicon particles, causing them to fracture. The silicon surfaces newly formed by pulverizing during this process react with the electrolyte, forming irreversible compounds, which leads to the continuous consumption of both electrolyte anions and lithium ions, thus decreasing the battery capacity. Additionally, lithium dendrites that grow from the current collector surface may break off during discharge, becoming electrically isolated from surrounding particles. These dead lithium fragments are another known cause of capacity loss.

To mitigate these issues, electrolytes are designed by combining organic solvents with low reactivity to silicon, and after infilling the electrolyte, a formation process of maintaining same at room temperature and the application of a low current aging step for sufficient time are conducted. This process introduces the formation of a stable solid electrolyte interphase (SEI), which helps suppress excessive reactions with the electrolyte (Kong et al., Molecules, 28, 2023, 2079; Toki et al., Ind. Chem. Mater., 2024, Advanced Article). However, even with such efforts, it remains difficult to completely prevent the excessive consumption of electrolyte due to reactions with the silicon anode material during electrochemical operation.

To overcome the disadvantages, efforts have been made to enhance battery life by using silicon compounds with lower lithium storage capacities such as silicon oxide, silicon carbide, and silicon nitride instead of pure silicon. However, these silicon compounds not only have lower lithium storage capacities compared to pure silicon, but also lower ionic and electronic conductivity, and their production incurs higher costs. In the present disclosure, "ionic conductivity" refers to the ability to conduct cations, such as alkali metals or alkaline earth metals (e.g., lithium, sodium, or magnesium), which corresponds to Groups 1 and 2 in the Periodic Table, within a material; "electronic conductivity" is used in a similar sense to electrical conductivity, referring to the flow of electrons or electric current. To enhance lithium storage capacity and conductivity, processes have been added to form a metal-composite compound layer by binding a metal such as magnesium to the surface of the silicon compound, thereby achieving excellent ionic conductivity and thermochemical stability. Additionally, to compensate for the low electronic conductivity of silicon compounds, conductive additives such as carbon nanotubes, activated carbon, or conductive polymers have been incorporated.

In efforts to address the degradation of silicon anode materials, it has been found that when silicon particles undergo lithiation during electrochemical reactions, volume expansion initiated at the particle surface causes pulverization when particle size reaches approximately 200 nm. Moreover, it was discovered that when the initial diameter of silicon particles or wires is less than 150 nm, the stress induced by volume change is significantly reduced. Further reductions in particle size to below 30 nm, particularly to the 4-6 nm range, result in less pulverization and relatively minor capacity loss over extended cycling. Indeed, improved battery capacity has been reported when nano-silicon was deposited onto a nickel foil current collector and used as an anode (Ohara et al., Journal of Power Sources, 136, 2004, pp.303-306). Although such silicon thin-film anodes exhibit excellent capacity retention, it was found that the benefit diminishes when the film thickness increases. Additionally, finer silicon anode material particles exhibit larger specific surface area, leading to lower initial coulombic efficiency (ICE), and the battery capacity drops significantly, reaching less than 40% of the theoretical capacity. Furthermore, the production of such nano-silicon particles requires high-cost processes such as precipitation of nano-silicon particles from gas- or liquid-phase silicon precursors within high-temperature vacuum systems, or etching of silicon wafers with acid to form nanowires, which makes mass production economically infeasible (Je et al., Accounts of chemical research 56, 2023, pp.2213 - 2224; Kong et al., Molecules 28, 2023, 2079; Keller et al., Nanomaterials 11, 2021, 307; Wang et al., Nano Energy 78, 2020, 105101; Meng et al., Green Energy & Environment 5, 2020, pp.22 - 36; Kim et al., Angewandte Chemie Int. Ed. 49, 2010, pp.2146 - 2149).

In general, silicon has inherently low electronic conductivity and limited ionic conductivity, which is typically observed only in composite oxide crystal structures or grain boundaries when combined with other metals.

The electrical conductivity of silicon is approximately 6.7 × 10⁻⁴ S/cm, whereas that of silicon oxide is about 1.65 × 10⁻¹⁰ S/cm, indicating that the conductivity of silicon compounds tends to be lower than that of pure silicon. This reduction in conductivity is attributed to the larger bandgap of silicon compounds. On the other hand, silicon compounds tend to have higher lattice constants, which contribute to increased ionic conductivity. Although bandgaps vary depending on crystal structures and atomic site configurations, in general, silicon has the smallest bandgap, followed in order by silicon carbide, silicon nitride, silicon oxide, and silicon fluoride. Accordingly, it is desirable for the buffer layer to form a compound layer that has a smaller bandgap than conventional silicon compounds and a lower tendency to form irreversible Li₂SiF₆ phases.

Conventionally, silicon compounds have been produced using methods such as vapor deposition, high-temperature solid-state synthesis, alloying, and electrospinning. Among these, reactions of molten metallurgical-grade silicon with quartz at temperatures above approximately 1,600°C, or reactions of quartz with gas phases, have enabled synthesis of SiOₓ, SiNₓ, and other compounds with relatively small bandgaps. For example, SiO-based anode materials contain fewer oxygen atoms than SiO₂, resulting in a smaller lattice constant and more metallic character, and thus exhibit higher electrical and ionic conductivity compared to SiO₂. However, SiO-based silicon oxides form irreversible Li₂O upon initial charging by reacting with lithium ions, which causes volume expansion and reduces battery capacity, thereby leading to low initial coulombic efficiency (ICE). In addition, the process of producing silicon oxides by reacting molten metallurgical silicon or quartz with gases at high temperatures has drawbacks such as shortened equipment lifespan and the need for significant investment to improve productivity.

Silicon nitride can be obtained by heat-treating silicon particles in a nitrogen atmosphere at temperatures above 1,000°C to form a nitride layer on the silicon particles, or by reacting silicon gas precursors with decomposed ammonia gas under high power in CVD equipment to obtain SiNₓ compounds. SiNₓ silicon nitride reacts electrochemically with lithium to form Si₃N₄ and Li₃N or Li₂SiN₂, and these are known to undergo reversible reactions. However, when the x value in SiNₓ is as low as 0.32, a high battery capacity of 2,300 mAh/g is exhibited; in contrast, when x = 0.69, the capacity sharply drops to below 80 mAh/g. Furthermore, when x = 0.92, a film thickness of 200 nm yields a capacity of 1,300 mAh/g after 100 cycles, whereas a 500 nm thickness results in a significantly lower capacity of 700 mAh/g, indicating instability (Ulvestad et al., Nature Scientific Reports, 8, 2018, 8634).

Although the method of synthesizing compounds at high temperatures using silicon gas precursors simplifies the overall process, it suffers from poor cost competitiveness due to the expensive gas precursors. Moreover, it is difficult to precisely control the thickness of the compound layer formed on the surface of nanoparticles at high temperatures, and as the electrode layer thickness increases, the battery capacity tends to decrease when using an anode composed of nanoparticles.

An alternative method involves alloying molten metallurgical-grade silicon with transition metals at high temperatures, followed by squeeze casting into fibrous wires or atomization to produce fine alloy powders. While this approach is somewhat more cost-effective than using gas precursors, it has the drawback of requiring additional pulverization of the resulting tens-of-micrometer-sized particles or fibrous wires to achieve sizes suitable for use as anode materials.

In consideration of these facts, conventional silicon compound-based anode materials involve high processing costs and face difficulties in controlling the surface compound layer.

Korean Patent No. 10-2309264 proposes a method for fabricating pure silicon-based anode materials through a relatively simpler process than that required for silicon compounds. In this method, several-micrometer-sized metallurgical-grade silicon is crushed to a size of 100-200 nm and then thermally treated in air at 350-450 °C for 2 hours. This treatment forms a SiOₓ (0.5 < x < 1.2) surface layer with a thickness of 5-10 nm on the surface of the nano-silicon powder. Subsequently, the resulting material is milled with graphite powder (approximately 25 % by weight) to form a graphene layer on the surface. This method significantly reduces processing costs by forming an oxide layer on the surface of silicon particles through controlled temperature and time using an air oxidation process. However, when crushed silicon powder is thermally treated in air, the temperature and exposure to oxygen inevitably vary depending on the position of the powder within the bulk container. Silicon particles exposed on the surface of the bulk are more readily heated and oxidized due to direct contact with air, whereas those inside the bulk experience inconsistent heating and limited exposure to oxygen, leading to variation in the degree of oxidation. More precisely, even within a single silicon powder particle, differences in local temperature and oxygen concentration due to contact with surrounding particles result in non-uniform thickness and composition of the surface oxide layer. Such issues inherent to the air oxidation method lead to inconsistencies in the composition and thickness of the silicon oxide layer, which in turn result in variations in product quality and performance. When particles with non-uniform oxide layers are used as anode materials, they may cause increased electrolyte consumption and make it difficult to maintain consistent battery capacity.

As another example, U.S. Patent No. 9,077,029 discloses a method for forming a silicon anode active material in which flake-shaped silicon powder is coated with an oxide layer of approximately 200 nm thickness by high-energy sputtering in an oxygen-mixed gas atmosphere, wet ball-milling in ethanol solvent, or ball-milling in an oxygen-mixed gas atmosphere, such that oxygen atoms are included in an amount of about 5% to 36% by weight. However, such a thick oxide layer significantly reduces electrical conductivity and makes it difficult to achieve an initial coulombic efficiency exceeding 80%. Chinese Patent No. CN112366301 A discloses a method involving the oxidation of crushed silicon particles, followed by acid-washing to remove impurities, and then coating with an organic carbon source and performing high-temperature pyrolysis to form a carbon layer. However, in this method, impurities are dissolved and removed during the acid-washing step, which damages the buffer layer and undermines the protective effect on the silicon particles. As a result, a thicker carbon protective layer must be applied afterward, which is a drawback. Korean Patent No. 10-2334001 and Korean Patent No. 10-2023-0023529 A propose nano-silicon particles in which a thick layer of polyacrylonitrile (PAN)-based polymer is coated on the surface of silicon or silicon compound particles at a weight ratio of about one-third, and then cross-linked through low-temperature heat treatment or carbonized at a high temperature of 500°C to 1000°C. The carbonized layer formed on the surface of silicon particles by high-temperature pyrolysis offers greater stability than an oxide layer formed via air oxidation. However, in the process of applying a polymer layer to the surface of silicon particles, the organic material must be dispersed in a solvent using ultrasonic dispersion or multiple stages of stirring, followed by centrifugation to form the polymer coating layer. Subsequently, heat treatment at 110°C to 300°C is carried out to achieve cross-linking on the surface of the polymer layer. This is followed by further heat treatment at 500°C to 1,250°C to carbonize the polymer layer. In addition to polyacrylonitrile-based polymers, other organic materials such as PVP, PAA, Li-PAA, PVDF, CMC, polypyrrole, PEDOT, polyaniline, polyethylene, PVA, PVAc, and PMMA have also been used in similar methods, where more than 30% by weight is coated onto silicon particles and carbonized. As seen from the prior art, forming a stable buffer layer on silicon particles often requires the use of expensive equipment to form a thick carbonized film or involves prolonged multi-step processes, resulting in a significant increase in manufacturing cost. In contrast, current industrial demands require anode materials that possess both cost competitiveness and high performance. Accordingly, there is a need to provide materials that can be used as silicon anode materials through a simple process using inexpensive raw materials.

### Disclosure of Invention

### Technical Problem

An aspect of the present disclosure is to provide a silicon anode material that overcomes the problem of pure silicon anodes failing to maintain battery capacity during repeated charge/discharge cycles, wherein a thin buffer layer is formed on the surface of pure silicon particles to stably maintain battery capacity and suppress excessive reactions between silicon and the electrolyte. Specifically, the present disclosure aims to suppress the excessive insertion of lithium ions by forming a thin buffer layer film on the surface of pure silicon particles using an oxidizing agent, thereby minimizing pulverization caused by the volume change of the silicon particles. In addition, the buffer layer serves to inhibit the formation of irreversible compounds due to reactions between the silicon particle surface and the electrolyte, thereby reducing continuous electrolyte consumption during repeated charge/discharge cycles. In particular, electrolytes containing fluorine and lithium ions tend to form irreversible Li₂SiF₆ phases on the surface of silicon during electrochemical reactions. Therefore, suppressing this reaction and forming a more stable lithium silicate compound film as a buffer layer during prelithiation, the initial formation process, or early charge/discharge cycles is a key to making pure silicon viable as a stable anode material.

### Solution to Problem

According to various embodiments of the present disclosure, the silicon composite may include: silicon particles; and a buffer layer film coated on the surface of the silicon particles.

A method for manufacturing a silicon composite according to various embodiments of the present disclosure may include steps of: pulverizing silicon particles; and forming a buffer layer film on the surface of the silicon particles.

An anode for a secondary battery according to various embodiments of the present disclosure may include the above-described silicon composite.

A secondary battery according to various embodiments of the present disclosure may include the above-described anode.

### Advantageous Effects of Invention

The silicon composite for anode materials according to the present disclosure forms a non-stoichiometric silicon oxide thin film on the surface of pure silicon particles via a simple oxidation process, using the oxide film as a buffer layer. Furthermore, by forming a lithium silicate thin film prior to the formation of fluorinated compounds on the silicon anode, the electrochemical stability is improved. Additionally, by applying a stabilization layer over the buffer layer to enhance conductivity and control surface charge, silicon can be well dispersed in the anode slurry, and the mobility of metal cations can be improved, thereby enhancing charge/discharge rate performance and extending cycle life.

### Brief Description of Drawings

FIG. 1 is a process flow diagram illustrating a method for manufacturing a silicon composite anode material according to various embodiments of the present disclosure.
FIG. 2 is a schematic view of the method for manufacturing a silicon composite anode material and the resulting silicon composite anode material according to various embodiments of the present disclosure.
FIG. 3 is a diagram illustrating an example of applying mechanical shear energy to silicon particles during the manufacturing process, showing the interaction between beads and metallurgical-grade silicon particles inside the milling container.
FIG. 4a is a photograph of Example 2 of the present disclosure observed at 500× magnification, FIG. 4b at 1000× magnification, FIG. 4c at 5000× magnification, and FIG. 4d at 10000× magnification.
FIG. 5a is a photograph of Example 7 of the present disclosure observed at 500× magnification, FIG. 5b at 1000× magnification, FIG. 5c at 5000× magnification, and FIG. 5d at 10000× magnification.
FIG. 6a shows the XRD analysis results of Example 1 of the present disclosure.
FIG. 6b shows the XRD analysis results of Example 2 of the present disclosure.
FIG. 7a shows the battery test results of an anode material mixed with 10% of Example 1 of the present disclosure.
FIG. 7b shows the battery test results of an anode material mixed with 10% of Example 2 of the present disclosure.
FIG. 8a shows the battery test results of an anode material mixed with 20% of Example 1 of the present disclosure.
FIG. 8b shows the battery test results of an anode material mixed with 20% of Example 2 of the present disclosure.

### Mode for Carrying out the Invention

Hereinafter, various embodiments of the present disclosure will be described with reference to the accompanying drawings. The embodiments and the terms used herein are not intended to limit the disclosed technology to specific implementations, and should be understood to include various modifications, equivalents, and/or alternatives of the embodiments.

### Silicon Composite

Various embodiments of the present disclosure relate to a silicon composite that can be used as an anode material. The silicon composite of the present disclosure can be used as a pure silicon anode material.

In the present disclosure, the term "pure silicon anode material" refers to silicon materials regardless of shape, such as zero-dimensional nanoparticles, one-dimensional rod shapes, two-dimensional flakes, or three-dimensional polyhedrons. Unless otherwise specified, the term "silicon anode material" may be understood as referring to a pure silicon anode material.

According to various embodiments of the present disclosure, the silicon composite may include: silicon particles and a buffer layer.

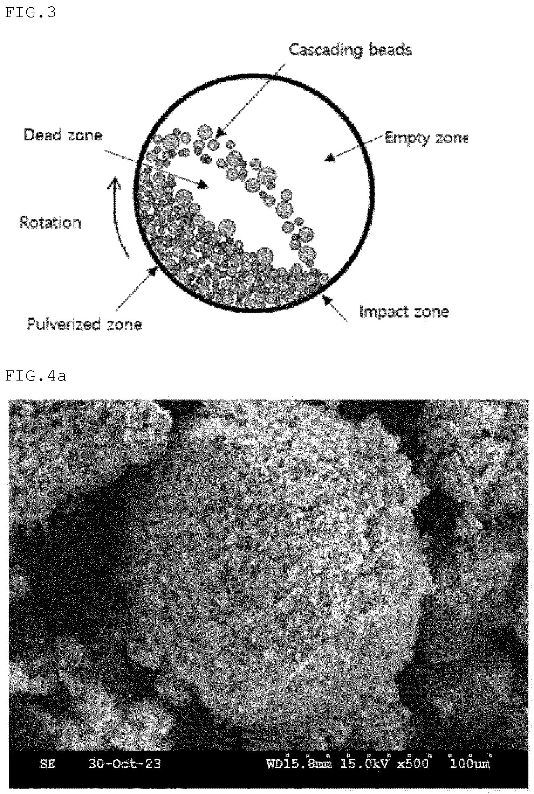

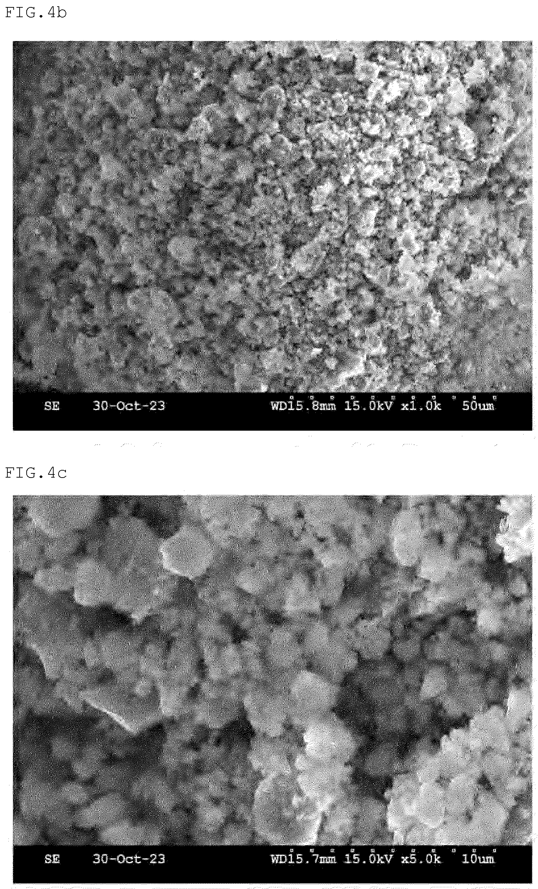

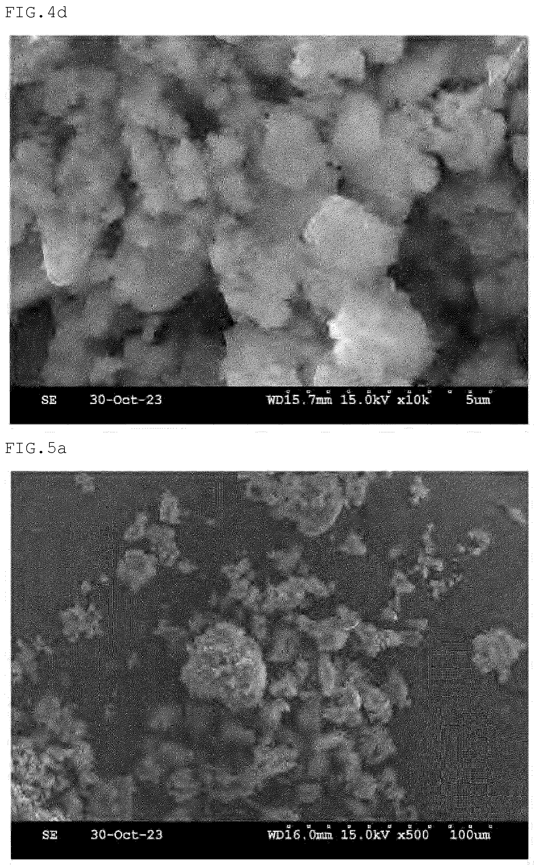

The sili con particles may be rod-shaped or flake-shaped with an average grain size of 10 to 1000 nm, or may have an average grain size of 10 to 1000 nm as calculated from XRD peaks using the Scherrer equation (see FIGS. 4, 5, and 6). Here, the term "size" refers to the diameter or thickness. This size range enables the silicon composite of the present disclosure to exhibit high lithium-ion storage capacity when used as an anode material in energy storage devices.

Specifically, the silicon particles may have a Gaussian particle size distribution ranging from 5 to 2000 nm. More specifically, the silicon particles having an average particle size of 10 to 1000 nm may account for at least 85% of the total silicon particles, silicon particles smaller than 10 nm may account for less than 5%, and silicon particles larger than 1000 nm may account for less than 10%. Preferably, the particle size distribution by volume may include 1 to 10% of particles in the range of 10 to 35 nm, 45 to 95% in the range of over 35 to 65 nm, 3 to 45% in the range of over 65 to 100 nm, and 0 to 15% over 100 nm. If the average particle size is less than 10 nm, it may not significantly contribute to increasing battery capacity; if it exceeds 1000 nm, the large volume change during charge/discharge may reduce capacity retention.

The buffer layer of the present disclosure may be coated on the surface of the silicon particles. This buffer layer may protect the silicon particles from abrupt reactions with metal cations or electrolytes, thereby suppressing excessive volume expansion. In addition, the buffer layer may resolve issues related to non-uniform oxidation layers on silicon particles and enable excellent ionic conductivity.

The buffer layer may include any one of a silicon oxide thin film, a silicon nitride thin film, or a composite film thereof. It may specifically include a non-stoichiometric silicon oxide film having the chemical formula SiOₓ (0.5 < x < 1.2), a non-stoichiometric silicon nitride film having the chemical formula SiNₓ (0.1 ≤ x < 1), or a composite film thereof. Preferably, the buffer layer may include silicon monoxide (SiO). By including a silicon compound in the buffer layer, the electrochemical stability of the silicon anode material can be improved.

Additionally, the buffer layer enables the formation of a stable SEI on the surface of the pure silicon.

Known SEI phases formed by the reaction between silicon anodes and electrolytes include: lithium fluoride (LiF), which passivates the silicon surface; lithium oxide (Li₂O), formed by the reaction between the silicon oxide layer and lithium; organic compounds resulting from the decomposition of electrolyte and additives; and silicon oxide (SiOₓ) generated by free oxygen during charging. These components are known to help suppress further reactions between lithium ions or halide ions in the electrolyte and the silicon surface, thus contributing to the formation of a stable SEI. However, in practice, pure silicon reacts electrochemically with fluorinated electrolytes, such as LiPF₆, to continuously form irreversible halide compounds, especially porous and highly insulating compounds such as Li₂SiF₆. As a result, the surface of the silicon anode becomes passivated, leading to a sharp decline in battery capacity after only 1 to 3 cycles (Yu et al., Nano Letters, 2019, 19, pp. 5124-5132). For this reason, pure silicon anode materials have been difficult to commercialize, and anode materials based on silicon compounds, which generate fewer irreversible compounds, have been commercialized earlier than pure silicon.

The following scheme of Reaction Formulas (1) through (4) represents the formation of irreversible fluorides between silicon-based anode materials and electrolytes as observed in the course of the present disclosure. Based on the order of reaction energies, the reaction (1) between pure silicon and the electrolyte occurs more readily than the reactions involving silicon compounds in reactions (2), (3), and (4). In other words, pure silicon has a greater tendency to form irreversible fluorides compared to silicon compounds such as silicon carbide, silicon nitride, or silicon oxide. For this reason, the development of anode materials using silicon compounds rather than pure silicon has progressed more rapidly.

Si + 2Li + 3F₂ = Li₂SiF₆ (1)

SiC + 2Li + 3F₂ = Li₂SiF₆ + C (2)

1/3Si₃N₄ + 2Li + 3F₂ = Li₂SiF₆ + 2/3N₂ (3)

SiO₂ + 2Li + 3F₂ = Li₂SiF₆ + O₂ (4)

Although the silicon compounds in reaction formulas (2) to (4) have lower reactivity with fluorine than pure silicon and thus a reduced tendency to form irreversible fluorides, the bandgap (8.08 eV) and formation energy (-3.408 eV/atom) of lithium-silicon fluoride are higher than those of lithium silicates (bandgap of 4.66 to 5.35 eV, formation energy of -2.63 to -3.01 eV/atom), resulting in lower electronic and ionic conductivity. Accordingly, the formation of lithium-silicon fluoride reduces the initial coulombic efficiency and consequently decreases battery capacity. Since silicon compounds exhibit approximately half the battery capacity of pure silicon, twice the amount must be blended to achieve the same capacity as pure silicon. Moreover, when comparing the reaction (1) for Li-Si fluoride formation with reaction formulas (5) through (15) for the formation of fluorides or carbon fluorides of lithium alone, the formation of fluorides or carbon fluorides of lithium alone or lithium-silicon alloys is less likely to precede the formation of lithium silicates derived from silicon oxide. In addition, the separation of lithium ions diffused into graphite or silicon during charging and their release during discharging is a reaction with a lower energy requirement than the oxide or fluoride formation reactions inside the battery. The following reactions are listed in order of reaction energy, assuming that all materials are of equivalent size and crystallization energy and that the comparison is based solely on the reaction energies of pure materials:

2SiO + 2Li + 1.5O₂ = Li₂Si₂O₅ (5)

SiO + 4Li + 1.5O₂ = Li₄SiO₄ (6)

SiO + 2Li + 3F₂ = Li₂SiF₆ + 0.5O₂ (7)

SiO + 2Li + O₂ = Li₂SiO₃ (8)

SiO₂ + 4Li + O₂ = Li₄SiO₄ (9)

C + F₂ = CF₂ (10)

2SiO₂ + 2Li + 0.5O₂ = Li₂Si₂O₅ (11)

SiO₂ + 2Li + 0.5O₂ = Li₂SiO₃ (12)

Li + 0.5F₂ = LiF (13)

C + 2F₂ = CF₄ (14)

LiₓSi = xLi⁺ + Li₀Si + xe⁻ (15)

LiₓC₆ = xLi⁺ + Li₀C₆ + xe⁻ (16)

From the above comparisons, it can be seen that when a SiO or SiO₂ film is formed on the surface of silicon particles, lithium-silicon oxides function as a buffer layer that protects against further fluorine attack, acting as a barrier. Additionally, compared to stoichiometric SiO₂, non-stoichiometric SiO more readily reacts with lithium to form stable lithium silicate thin films such as Li₂Si₂O₅, Li₂SiO₃, or Li₄SiO₄ on the silicon surface, thereby suppressing the formation of Li₂SiF₆ fluorides.

Under the background, the present disclosure provides a method for suppressing the formation of irreversible fluorides on pure silicon surfaces by forming a buffer layer composed of one or more non-stoichiometric silicon oxides or a mixture thereof, which acts as a solid electrolyte interface (SEI). As a result, during prelithiation, the initial formation process, or early charge/discharge cycles, lithium preferentially reacts with the silicon particle surface to form chemically stable lithium silicate compounds such as Li₂Si₂O₅, Li₂SiO₃, or Li₄SiO₄, thus creating a lithium silicate SEI layer that serves as the buffer film. This allows for the production of low-cost anode materials with excellent performance. The Li₂Si₂O₅, Li₂SiO₃, and Li₄SiO₄ layers exhibit high ionic conductivity and, when formed as thin films, do not significantly reduce electronic conductivity, making them suitable for use as buffer layers.

During the formation of the buffer layer, depending on the type of oxidizing agent used for chemical surface treatment, the buffer layer may be formed as a silicon oxide thin film, a silicon nitride thin film, or a composite thin film thereof. Accordingly, the buffer layer can secure excellent ionic and electronic conductivity, and can preferentially react during electrochemical reactions, thereby suppressing the formation of irreversible compounds such as Li₂SiF₆ through competitive inhibition.

In the present disclosure, unless otherwise specified, the term "ionic conductivity" may be broadly understood as referring to the conductivity of alkali metal cations or the diffusivity within the anode material.

In the silicon composite of the present disclosure, a stabilization layer may be additionally coated on the buffer layer. The stabilization layer improves the slurry dispersibility and conductivity of the silicon particles with the buffer layer, and promotes the formation of a stable solid electrolyte interphase (SEI) through reaction with the electrolyte, thereby allowing the anode material to exhibit superior characteristics after formation processing. Due to these properties, the silicon composite of the present disclosure can achieve a higher initial coulombic efficiency than conventional silicon compound anode materials. Furthermore, by mixing with conventional graphite anode materials, the silicon content can be adjusted to meet required battery capacities or driving range specifications.

The stabilization layer may include at least one selected from the group consisting of carbonaceous materials, fluorides, phosphides, hydroxides, iodides, nitrates, and organic acids.

### Anode Material Using the Silicon Composite

In the present disclosure, the pure silicon anode material preferably uses particles with a purity of 95% or higher and a size of 4 mm or less for ease of quality control in mass production. More preferably, particles with a purity of 98% or higher and a size of 100 mesh (approximately 150 micrometers or less) are used. If the pure silicon is derived from silicon wafer scrap used in semiconductors or solar cells, the purity may be as high as 99.9999%. In addition, the use of nano-silicon synthesized from gas-phase or liquid-phase silicon precursors also falls within the scope of the present disclosure. Furthermore, the silicon raw material used in the present disclosure is not limited by purity or size, and a wide range of materials may be adopted, from high-purity wafer scrap to lower-purity metallurgical-grade silicon. Among silicon raw materials, metallurgical-grade silicon is the most economical, with typical purities of approximately 95% or higher, and several commercial grades exist up to 99% purity. The main impurities in metallurgical-grade silicon are iron, aluminum, and calcium, which all have higher electronegativity potentials than lithium. Therefore, when these components are alloyed within metallurgical-grade silicon, they do not interfere with the electrochemical reaction of lithium ions, providing the advantage that the lithium ion reaction is not sensitive to such metal impurities. In addition, this type of silicon is often supplied already pulverized by the manufacturer, which helps minimize the load of the grinding process.

As an example of the pure silicon anode material of the present disclosure, metallurgical-grade silicon that is readily available and economical may be used as the raw material. As previously described, even if the raw material is switched to high-purity wafer scrap, the morphology and performance of the resulting pure silicon anode material remain largely unchanged. When the particle size is below several tens of nanometers, the volume expansion of the silicon particles is not significant, but due to the high surface-to-weight ratio, the proportion of SEI formation on the surface is high, resulting in greater capacity loss. Conversely, as the particle size exceeds several hundred nanometers, the proportion of SEI formation relative to particle weight decreases; however, the amount of lithium ions penetrating through the buffer layer and into the silicon particle becomes less than the theoretical maximum lithium content of the compound. In the present disclosure, the silicon raw material is subjected to mechanical shear energy to obtain pulverized silicon particles with a Gaussian size distribution in the range of approximately 5-2000 nm. Among them, 85% or more of the material consists of particles having an average diameter or thickness in the range of 10-1000 nm. Less than 5% of particles are smaller than 10 nm, and less than 10% are larger than 1000 nm. Preferably, the average diameter or thickness is in the range of 20-250 nm.

The pure silicon anode material of the present disclosure can form a buffer layer on its surface that reduces aggressive reactivity with metal cations or electrolytes. Additionally, a stabilization layer that improves slurry dispersibility and conductivity may be applied on top of the buffer layer.

### Industrial Applications of Silicon Anode Material

Based on the principles described above, the anode material of the present disclosure including pure silicon with a buffer layer can undergo stable repeated charge/discharge cycles in electrochemical reactions, thereby improving initial coulombic efficiency and cation storage capacity. In particular, in lithium secondary batteries, the anode material of the present disclosure can achieve equivalent performance with a smaller quantity compared to conventional silicon compound anode materials such as silicon oxide, silicon carbide, and silicon nitride.

According to the present disclosure, the silicon anode material is prepared by applying mechanical shear energy via such as impact, friction, agitation, and pressure with beads to pulverize inexpensive metallurgical-grade silicon as the raw material. Then, a chemical surface treatment with an oxidizing agent is carried out in the container without additional heat treatment, forming a buffer layer on the silicon surface. This manufacturing process is simple and does not require expensive high-temperature thermal treatment equipment or costly precursors. Moreover, the degradation of silicon particles is minimized, enabling the achievement of high battery capacity with a smaller amount of material. Accordingly, the silicon anode material manufactured by the present disclosure presents a promising alternative that meets the demand for cost reduction in silicon anode materials, which is a critical requirement for the realization of low-cost secondary batteries essential to the widespread adoption of electric vehicles.

### Method for Manufacturing the Silicon Composite

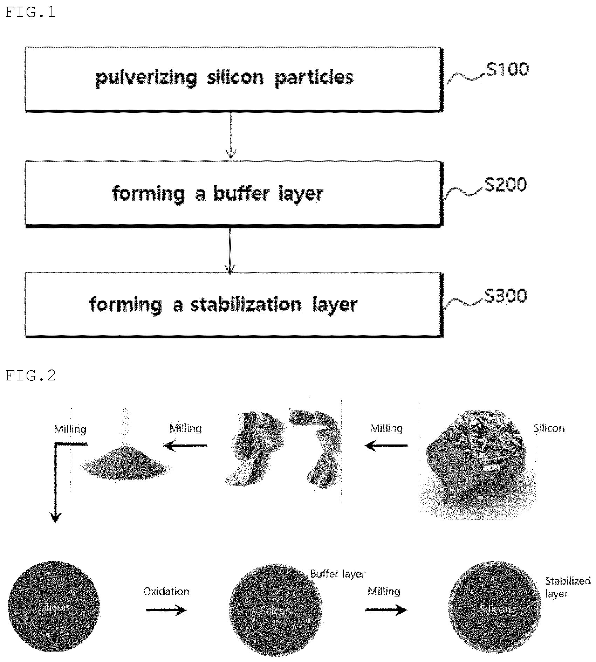

With reference to FIG. 1, a method for manufacturing the silicon composite according to various embodiments of the present disclosure may include the steps of: pulverizing silicon particles (S100), and forming a buffer layer (S200). Optionally, the method may further include a step of forming a stabilization layer (S300) after the step of forming a buffer layer (S200).

By chemically surface-treating the pure silicon particle surfaces to form the buffer layer, the method suppresses the excessive formation of irreversible compounds when the pure silicon particles are exposed to an electrochemical environment containing both cations and halide ions, which prevents undue electrolyte consumption and capacity fade, thereby maintaining the capacity of the silicon anode material.

Below, each step is described in greater detail.

### (1) Step of Pulverizing Silicon Particles (S100)

First, in step (S100), the silicon particles may be pulverized by applying mechanical shear energy to a mixture of metallurgical-grade silicon material and hard beads made of materials such as alumina or zirconia.

Specifically, milling may be performed by mixing hard beads with metallurgical-grade silicon powder and applying mechanical shear energy for pulverization. Through this process, silicon particles having an average diameter or thickness of 10 to 1000 nm may be obtained for use in the silicon composite.

Referring to FIG. 2, in various embodiments of the present disclosure, the buffer layer of the silicon composite may consist mainly of metallurgical-grade silicon, and the particle surface may be chemically surface-treated with an oxidizing agent to suppress continuous reactions with the electrolyte. The oxidizing agent used herein functions by providing electrons to oxidize silicon and may include one or more selected from oxygen, nitrogen, boron, phosphorus, sulfur, halogen elements, or acidic functional groups. Based on XRD analysis of the silicon composite of the present disclosure and using the Scherrer equation applied to the ratio of peak height to peak width, it can be confirmed that the pulverized silicon grains have an average size of 10 to 1000 nm. In this method, since the silicon composite is manufactured using low-cost metallurgical-grade silicon that is mechanically pulverized and chemically surface-treated, there is no need for expensive gas-phase or liquid-phase silicon precursors or high-end equipment, thus reducing manufacturing cost while achieving high battery capacity with a small amount of material.

In the step of pulverizing silicon particles (S100), milling may be performed by mixing hard beads with metallurgical-grade silicon powder and applying mechanical shear energy. Any silicon powder suitable for pulverization may be used as a raw material; however, in consideration of milling time, particles with a size of 20 µm to 4 mm, preferably 45 to 250µm, are used. Nonetheless, various particle sizes may also be used as raw material since particle size can be reduced through the pulverization process.

In the step of pulverizing silicon particles (S100), the method of applying mechanical shear energy to metallurgical-grade silicon particles may specifically involve milling. For this purpose, the silicon particles and beads are loaded into a milling container. The weight ratio of beads to the total weight of the mixture of beads and silicon may range from 50% to 95%, preferably from 60% to 86%. The remaining portion is composed of silicon particles. When the bead content is less than 50 % by weight, the time required for pulverizing the silicon becomes excessively long; when it exceeds 95 % by weight, the amount of silicon becomes too small, thus significantly lowering productivity.

The volume of the bead-silicon mixture loaded into the milling container may vary depending on the type of milling, but it is preferably loaded at a volume of 85% or less of the container's internal volume, and more preferably at 75% or less. If the loaded volume exceeds 85%, it becomes difficult for the beads to roll inside the rotating container, reducing the impact energy applied to the silicon particles and limiting space to accommodate the volume expansion caused by milling. This lowers the probability of effective shear energy transfer between the beads and the silicon particles, thus hindering pulverization. Therefore, it is desirable that the loaded volume be 85% or less. On the other hand, when the loaded volume is less than 25% of the container's internal volume, the mixture may rotate as a single mass while adhering to the inner wall of the milling container, resulting in a failure to mill effectively. Therefore, a volume of at least 25% is preferable. More preferably, the bead-silicon mixture may be loaded at 30% to 75% of the milling container's internal volume.

Table 1 below provides examples of bead-milled silicon particle sizes.

**TABLE 1**

| Bead diameter (mm) | Bead force ratio | Milled particle size (*µ*m) | Size ratio of Bead/Particle |
|---|---|---|---|
| 0.4 | 2.0x10⁻³ | 0.24 | 1667 |
| 0.8 | 1.6x10⁻² | 0.98 | 816 |
| 1.6 | 1.3x10⁻¹ | 3.91 | 409 |
| 3.2 | 1.0 | 15.6 | 205 |
| 6.4 | 8.0 | 62.5 | 102 |
| 12.7 | 64 | 250 | 51 |
| 25.4 | 512 | 1000 | 25 |

In the milling step, the entire process may be performed in a single phase from start to finish; however, to improve efficiency, the process may be divided into a primary milling step and a secondary milling step. The main purpose of the primary milling is to evenly disperse silicon particles between the beads when the silicon-bead mixture is introduced. The appropriate rotation speed for the primary milling can be determined by covering the milling container with a transparent temporary lid and visually observing or listening to the sound from the container. When the beads are seen rolling with an incline or when the sound of beads striking the container wall is heard, this indicates the maximum effective speed for primary milling. When expressed in terms of rotational speed, depending on the size and type of milling container, the optimal speed for a planetary mill of 250mL to 500mL capacity is approximately 150 to 340rpm, and preferably 200 to 300 rpm. The primary milling may be performed for 5% to 30% of the total milling time. If it is less than 5%, dispersion may be insufficient, resulting in an overly broad particle size distribution, which may degrade the performance of the silicon anode material. On the other hand, exceeding 30% may reduce production efficiency. Preferably, the primary milling duration is between 10% and 25% of the total milling time.

The main purpose of the secondary milling is to pulverize the silicon particles through collisions and friction with the beads. The proper rotation speed can similarly be determined by covering the milling container with a transparent temporary lid and observing visually or by sound. When frictional motion between beads or the sound of beads striking the container wall begins, this marks the minimum effective speed for secondary milling. As the speed is increased, if the sound of bead collisions to the wall of the milling container diminishes or nearly disappears, this indicates the maximum effective speed for secondary milling. Depending on the size and type of milling container, the appropriate rotation speed for secondary milling in a planetary mill of 250mL to 500mL is approximately 300 to 550rpm, preferably 350 to 450rpm. The duration of secondary milling varies with the loading volume, as higher loading results in a reduced probability of collisions between particles and beads.

The pulverization mechanism inside the milling container is as follows.

Silicon particles and beads are loaded into the milling container. As the container rotates or the bar rotates, the mixture moves, and the larger, heavier beads roll and rub against one another. During this process, shear force is applied to the silicon particles. Additionally, when the beads are lifted and then drop, impact and shear force are simultaneously applied to the silicon particles. Depending on the type of mill, the container may include arched, linear, or inclined protruding bars or rotating shafts with blades, which rotate at high speed to apply strong shear forces to the mixture. The collision and friction between beads and silicon particles then induce effective pulverization of the silicon.

Referring now to FIG. 3, the interaction between beads and silicon particles inside the milling container during the milling process is illustrated. FIG. 3 is a conceptual diagram of bead-silicon interactions within a horizontally rotating or planetary milling container. The large outer circle represents the milling container, the gray spheres represent the beads, and the brown spheres represent the silicon particles.

During the milling process, molten silicon particles may sometimes adhere to the inner wall of the milling container due to collisions between materials, gradually thickening and forming a buffer layer that prevents further effective pulverization. This phenomenon may occur when the proportion of large beads is excessively high, resulting in strong impact energy, or when the raw silicon material has absorbed significant atmospheric moisture, causing the fine silicon particles to become tacky and stick to the container wall. Therefore, it is necessary to adjust the ratio of bead sizes and weights, as well as the rotation speed of the container or rotor, so that the beads can move properly and achieve effective rolling and collision within the milling container. At lower rotation speeds, the tilt angle of the materials inside the container decreases, leading to more shear-based pulverization and mixing as beads rub against each other. As the speed increases, the pulverization becomes more impact-driven due to rolling and collisions between beads. The optimal rotation speed can be identified by covering the side of the milling container with a temporary transparent window for visual observation or by listening to the sounds from the outer wall. When beads roll at a tilt angle of approximately 25° or more, this represents the minimum threshold speed. As the speed increases and beads begin to bounce and collide at angles exceeding approximately 40°, pulverization becomes more active. When the angle exceeds 60°, beads can no longer collide effectively with the silicon particles, and rolling motion decreases. The materials begin rotating together while adhering to the inner wall due to centrifugal force-this is the maximum threshold speed. Thus, at angles below 25° or above 60°, collisions and rolling between beads and silicon particles are reduced, making pulverization difficult.

Depending on the size and type of milling container, it is possible to achieve nano-sized silicon particles in a short time by combining a high-speed motor system (up to 22,000 rpm) with rotors in systems such as attrition mills and beads of 3 mm or smaller. In conventional horizontal rotation mills or planetary mills, it is still possible to pulverize silicon to the target size of the present disclosure using motor systems with rotation speeds of approximately 60 to 650 rpm, preferably 150 to 450 rpm, depending on the container diameter.

The milling container used in the present disclosure may be equipped with a cooling mechanism to prevent unintentional oxidation of fine silicon particles due to heat generated during milling. This may involve attaching a circulating line of coolant fluid to the wall of the milling container and recirculating it via a pump, or using a PLC circuit or PID control system to intermittently pause the motor rotating the container, thereby suppressing temperature increase inside the container during operation. Additionally, by taking advantage of the tendency for fine particles to rise toward the upper part of the container during milling, a circulation line may be used to direct these fine particles to a separate auxiliary tank installed outside the container. Particles that are not yet sufficiently milled may remain at the bottom of the container for continued milling, thereby ensuring a uniform particle size distribution.

After milling, the silicon particles are recovered in powder form. The silicon particles targeted by the present disclosure exhibit a Gaussian size distribution in the 5 to 2,000 nm range, with more than 85% of the particles having an average diameter of 10 to 1,000 nm, less than 5% being smaller than 10 nm, and less than 10% being larger than 1,000 nm. Particles smaller than 10 nm are not favorable due to their large surface area per unit mass, which contributes little to battery capacity. Conversely, particles larger than 1,000 nm undergo significant volume expansion during repeated charge/discharge cycles, which reduces capacity retention: thus both are limited.

### (2) Step of Forming a Buffer layer (S200)

After step (S100) of pulverizing silicon particles, step (S200) involves forming a buffer layer on the surface of the silicon particles through chemical surface treatment.

Specifically, in the step of (S200), the buffer layer may be formed by bringing the pulverized silicon particles into contact with an oxidizing agent inside a surface-treatment vessel containing the oxidizer. In this process, no high-temperature thermal treatment is applied; instead, the surface of the silicon particles reacts chemically with the oxidizing agent to uniformly form a non-stoichiometric compound layer. Through this process, a uniform non-stoichiometric compound layer that suppresses aggressive reactivity with metal cations or electrolytes can be formed. As a result, the formation of excessive irreversible compound layers during electrochemical reactions can be suppressed. Preferably, the buffer layer may be formed as a thin film to enhance both electrical and ionic conductivity.

Here, oxidation refers to the process in which an atom, molecule, or ion loses electrons. An oxidizing agent is a substance with greater electron affinity than silicon, which reacts with silicon and causes it to lose electrons.

In the step of forming a buffer layer (S200), the oxidizing agent may be used alone or in combination with other agents.

Among silicon compounds, silicon carbide typically has the highest electrical conductivity, followed by carbon fluorides, silicon nitride, and silicon oxide in decreasing order. In general, graphite exhibits higher ionic conductivity than silicon. However, when silicon carbide, silicon oxide, silicon nitride, or silicon fluoride layers are formed on the surface of silicon, the ionic conductivity can be improved. Moreover, when the composition of the silicon compound layer is stoichiometric, its electrical conductivity tends to be low. In contrast, non-stoichiometric materials exhibit higher ionic and electrical conductivity compared to their stoichiometric counterparts.

In the present disclosure, by adjusting the molar ratio of the oxidizing agent relative to the silicon particles to 0.05 to 0.20 mole, a non-stoichiometric thin film of SiOₓ (0.5 < x < 1.2) or SiNₓ (0.1 ≤ x < 1), rather than stoichiometric SiO₂ or Si₃N₄, can be formed on the surface of silicon particles. This results in a buffer layer with higher ionic and electronic conductivity compared to stoichiometric compounds. The improved ionic and electronic conductivity of the non-stoichiometric buffer layer is attributed to several factors: the buffer layer is formed as a thin film close to two-dimensional, which allows for less electron confinement and easier electron movement through hopping; during the formation process or initial charge/discharge cycles, the silicon compound layer reacts with lithium ions to form complex oxides such as Li₂Si₂O₅, Li₂SiO₃, Li₄SiO₄ or complex nitrides such as LiSi₂N₃, LisSiN₃, and Li₂SiN₂, which have excellent ionic conductivity; and if functional groups from the oxidizing agent are partially incorporated into the SEI, the thin film state may be further stabilized. As a result, the formation of irreversible compound layers that reduce ionic/electronic conductivity and consume electrolytes can be effectively suppressed in the silicon anode material.

More specifically, the oxidizing agent used in the present disclosure functions to oxidize the surface of the silicon and may include at least one of active oxygen, nitrogen, boron, phosphorus, sulfur, halogen elements, or acidic functional groups. As such oxidizing agents, oxygen, ozone, hydrogen peroxide, sodium peroxide, magnesium peroxide, calcium peroxide, nickel peroxide, zinc peroxide, urea-hydrogen peroxide, strontium peroxide, benzoyl peroxide, dicumyl peroxide, nitrogen, nitric acid, zinc nitrate, ammonium nitrate, ammonium nitrite, ceric ammonium nitrate, tetra-n-propylammonium perruthenate, potassium nitrate, potassium nitrite, sodium nitrite, lithium nitrate, lithium nitrite, aluminum nitrate, chloramine T, trimethylamine, trimethylamine N-oxide (TMAO), p-chloranil (tetrachloro-p-benzoquinone), sodium dichloroisocyanurate, ethyl ester of chloroglyoxylic acid, sodium N-chlorobenzenesulfonamide, 4-acetamido-2,2,6,6-tetramethyl-1-oxo-piperidine tetrafluoroborate, phenol nitroprusside, boric acid, tetrafluoroborate, nitrosyl tetrafluoroborate, sulfuric acid, fuming sulfur trioxide, sodium sulfide, sodium hydrosulfide, sodium persulfate, ammonium persulfate, potassium persulfate, lithium sulfide, silicon sulfide, aluminum sulfate, potassium nitrosodisulfonate, hydrochloric acid, sodium hypochlorite, calcium hypochlorite, chloro-benzoic acids, perchloric acid, lithium perchlorate, sodium perchlorate, magnesium perchlorate, potassium perchlorate, calcium perchlorate, manganese perchlorate, iron perchlorate, nickel perchlorate, copper perchlorate, silver perchlorate, cesium perchlorate, barium perchlorate, tetrabutylammonium perchlorate, N-hydroxy tetrachlorophthalimide, sodium dichloroisocyanurate, chloroglyoxylic acid ethyleste, sodium N-chlorobenzene sulfonamide, 2,3-dichloro-5,6-dicyano-p-benzoquinone, p-chloranil (tetrachloro-p-benzoquinone), pyridinium chlorochromate (PCC), oxalyl chloride, methyl oxalyl chloride, DPI (diphenyliodonium chloride), oxalyl bromide, monobromoiodine, sodium bromide, N-bromosuccinimide, manganese oxide, sodium permanganate, potassium permanganate, periodic acid, sodium periodate, potassium periodate, potassium perruthenate, diacetoxyiodobenzene, bis(trifluoroacetoxy)iodobenzene, 2-iodoxybenzoic acid (IBX), HTIB (hydroxy(tosyloxy)iodobenzene), tert-butyl hydroxyide, tert-butyl hydroperoxide, TEMPO, molybdophosphoric acid, chromic acid, potassium dichromate, pyridinium dichromate, ammonium dichromate, selenium dioxide, Oxone, cumene hydroperoxide, sodium metaperiodate, DMP (Dess-Martin periodinane), osmium tetroxide, potassium osmate, sodium percarbonate, MMPP (magnesium monoperoxyphthalate), TCNE (tetracyanoethylene), NMMO (4-methylmorpholine-N-oxide), trioxo chromium-sulfuric acid solution, hydrofluoric acid, phosphoric acid, urea, oxalic acid, acetic acid, citric acid, tartaric acid, formic acid, malic acid, succinic acid, glycinate, glycolic acid, nicotinic acid, lemon acid, malic acid, benzoic acid, butyric acid, salicylic acid, succinic acid, acetylsalicylic acid (aspirin), ascorbic acid, peracetic acid, carbonic acid, caffeic acid, citric acid, palmitic acid, carboxylic acids, sulfinic acids, sulfonic acids, phenols, formic acid, fumaric acid, thiophenol, oximes, enols, amides, sulfonamides, and nitro compounds may be used alone or in combination.

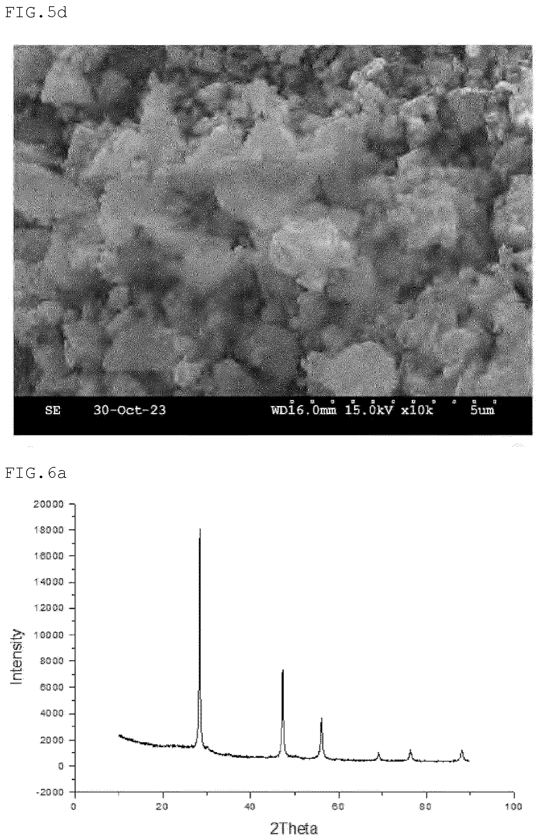

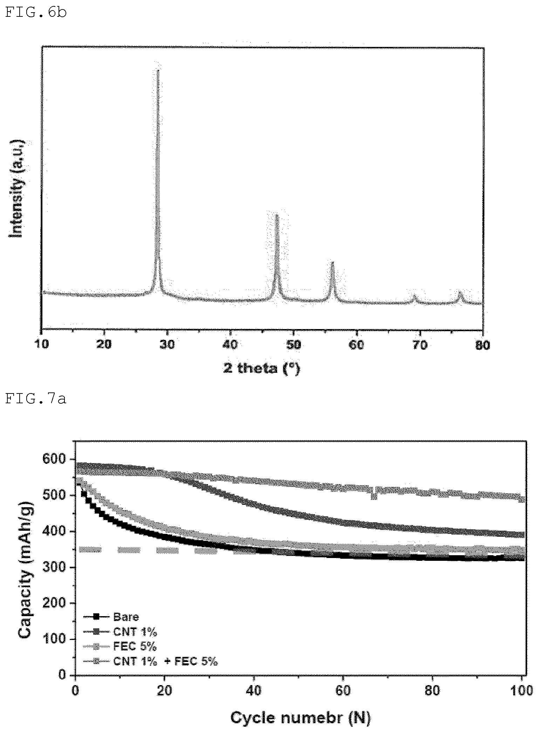

According to the present disclosure, the step of forming the buffer layer (S200) involves a chemical surface treatment method is employed in which the silicon particles are exposed to an oxidizing agent in a gaseous or liquid phase. Since the oxidizing agent is in a gaseous or liquid state, it can come into uniform contact with the surface of the silicon particles and react with them chemically to form a compound layer. FIG. 6a shows the XRD analysis results of silicon particles coated with a buffer layer and stabilization layer in Example 1, and FIG. 6b shows those for Example 2. Compared to the XRD patterns of pure silicon particles, the differences are negligible, indicating that both the buffer layer and the stabilization layer are formed as thin films. In the present disclosure, the buffer layer formed on the surface of the silicon particles is, specifically, a non-stoichiometric compound layer including one of SiO, SiOₓ (0.5 < x < 1.2), or SiNₓ (0.1 ≤ x < 1), or a composite layer formed by the reaction of the oxidizing agent with one or more elements such as nitrogen, boron, phosphorus, sulfur, halogens, or acidic functional groups. This layer may also be doped with metal ions or reactive groups included in the oxidizing agent. In this regard, it is possible to oxidize silicon particles by contacting same with an oxidizing agent using various methods including a method of immersing silicon particles in a surface-treatment vessel containing a solution of the oxidizing agent, a method of placing silicon particles in a sealed chamber and exposing them to a gas-phase oxidizing agent together with an inert gas in a fluidized bed, or subjecting the mixture to mechanical agitation, plasma discharge, or ultraviolet irradiation to promote oxidation, or a method of performing in-liquid plasma discharge in a tank filled with liquid-phase oxidizing agent.

By employing chemical surface treatment in the step of forming a buffer layer (S200), it becomes easier to control the formation of a non-stoichiometric compound layer through adjustment of the concentration of the oxidizing agent in the liquid or gas phase. According to the present disclosure, the amount of oxidizing agent is controlled to 0.05 to 0.20 mole per 1 mole of silicon. Considering that the average particle size is less than 1,000 nm and many particles fall in the tens-of-nanometer range, the addition of less than 0.05 mole of oxidizing agent per mole of silicon may be insufficient to form a buffer layer that provides adequate protection. On the other hand, exceeding 0.20 mole may result in the formation of an excessively thick buffer layer or lead to the generation of stoichiometric compounds. Preferably, the oxidizing agent is added in the range of 0.08 to 0.15 mole per 1 mole of silicon.

When a stoichiometric compound is formed, volume expansion may be mitigated; however, the irreversible compound layer generated on the particle surface becomes thicker, which lowers the initial coulombic efficiency (ICE). Additionally, these layers reduce the electrical conductivity of the anode material and result in lower charge/discharge rate capacity (C-rate), ultimately decreasing the charging speed. However, by adjusting the ratio of oxidizing agent supplied in the container based on the amount of silicon particles, it is possible to control the buffer layer to be a non-stoichiometric compound. This leads to improvements in electronic conductivity, ionic conductivity, initial coulombic efficiency (ICE), and charging speed.

Since the buffer layer is formed through a reaction with the oxidizing agent, heating may be employed to promote the reaction between the silicon particles and the oxidizer. Such heating also falls within the scope of the present disclosure. However, because the oxidation reaction of silicon is exothermic, heating should be applied only during the initial stage of the reaction, and the heating temperature should be maintained at 200 °C or below, preferably 150 °C or below. If the heated silicon particles agglomerate, it is possible to remill at a low speed (such as below 250rpm for a container 250-500mL) for a few minutes to disperse them once again.

### (3) Step of Forming a Stabilization Layer (S300)

After the step of forming a buffer layer (S200), a step of forming a stabilization layer (S300) may additionally be included. In the step of forming a stabilization layer (S300), a mechano-chemical reaction may be used to apply a stabilization-layer-forming material onto the surface of the silicon particles on which the buffer layer has been formed.

Specifically, in the step of forming a stabilization layer step (S300), a carbonaceous material such as activated carbon or graphite, or materials such as fluorides, phosphides, hydroxides, iodides, nitrates, or organic acids may be applied onto the surface of the silicon anode material through a mechano-chemical reaction. This process improves conductivity and slurry dispersibility, while also promoting the formation of a stable SEI.

According to the present disclosure, usable materials for the stabilization layer include carbonaceous materials, fluorides, phosphides, hydroxides, iodides, nitrates, and organic acids. To maximize ionic and electronic conductivity, the stabilization layer should be applied as thin as possible. A practical and effective way to control the thickness of the stabilization layer is to apply the coating by milling, using a mechanical bonding method, while adjusting the addition amount to 4 to 45 % by weight based on the weight of the silicon particles. Preferably, the addition amount is 5 to 35 % by weight, and more preferably 8 to 25 % by weight. The use of mechano-chemical reactions allows for minimizing the thickness of the stabilization layer. If less than 4 % by weight is applied, it may be difficult to sufficiently coat the silicon particle surface and yield the desired effect. If the amount exceeds 45 % by weight, the proportion of active silicon decreases, which may result in a reduction of battery capacity.

As for the carbonaceous materials to be applied as the stabilization layer, activated carbon and graphite may both be used, as well as fluorides, phosphides, hydroxides, iodides, nitrates, and organic acids. Among these, graphite is most commonly used. While it improves ionic conductivity, an increase in coating thickness can lower electronic conductivity, thereby reducing initial coulombic efficiency and degrading cycling performance that maintains the battery capacity. In contrast, applying activated carbon improves initial coulombic efficiency and is also advantageous in terms of cycling performance. However, the disadvantage of activated carbon is that it is somewhat less chemically stable and thermally resistant compared to graphite.

The electrical conductivity of the activated carbon layer applied for stabilization of the silicon anode material in the present disclosure varies depending on its source, ranging from 3.3 × 10² S/cm to 9.44 × 10⁻¹¹ S/cm. However, the electrical conductivity of both silicon and activated carbon is subject to change depending on the properties of compounds formed after the formation process and electrochemical reaction. Therefore, both the type of compound formed after the reaction and the thickness of the stabilization layer are critical factors.

In the present disclosure, the stabilization layer also serves to improve particle dispersibility in slurry. For non-aqueous solvents, activated carbon or iodides with strong hydrophobicity toward silicon are mainly applied. For aqueous-based solvents, more hydrophilic materials such as graphite or fluorides are used to enhance dispersibility. Moreover, the stabilization layer may be formed by: adjusting the mixing ratio of activated carbon and graphite; applying multiple sequential coatings of activated carbon and graphite; or alternating the coating sequence to achieve optimal performance. To avoid impairing electronic and ionic conductivity, the stabilization layer is applied in an amount of 4 to 45 % by weight, based on the weight of the silicon particles, with the goal of minimizing the coating thickness of the stabilization layer.

Regardless of its origin, any activated carbon may be used in the present disclosure, as exemplified by charcoal from coconut shells or wood, anthracite coal, and hydrocarbon-based sources. The BET surface area of such materials varies depending on the raw material and treatment method, generally ranging from 20 to 3,000 m²/g. With regard to wood-based activated carbon tar is easily available, hard-type activated carbon derived from charcoal and manufactured at 600 to 1,100°C undergoes a higher degree of carbonization than soft-type carbon made at lower temperatures. As a result, hard-type activated carbon possesses larger and more abundant pores, which are advantageous for the diffusion and storage of alkali metal cations. Typically used wood-based activated carbon exhibits a surface area in the range of 400 to 1,500 m²/g. In terms of physical form, granular or pellet-type activated carbon generally has a larger internal surface area than powder-type. A larger specific surface area contributes to improved electronic and ionic conductivity. In the present disclosure, activated carbon powder having an average particle size of 20 to 180 micrometers and a surface area of approximately 700 to 1,500 m²/g is used. When the average particle size of activated carbon is below 20 micrometers, the smaller the particle, the more likely it is that the pore structure has been damaged, resulting in reduced surface area. Furthermore, even if pores are present therein, actual contribution of the activated carbon to adsorption remains doubt due to moisture or residual impurities. Therefore, used in the present disclosure is the activated carbon that contains, by weight, iron as Fe₂O₃: 0.3 % or less and chloride: 0.25 % or less, preferably iron as Fe₂O₃:0.15 % or less and chloride: 0.13 % or less, more preferably iron as Fe₂O₃: 0.03 % or less and chloride: 0.05 % or less. To minimize the influence on the electrolyte, the pH of the activated carbon should be in the range of 5.0 to 8.0, preferably 6.0 to 7.5. In addition, the weight loss due to moisture on drying should be 10.0% or less, preferably 5.0% or less. If the moisture content exceeds 10.0%, the absorbed moisture by the material may cause surface oxidation, which increases hydrophilic functional groups. This can cause undesirable variability in slurry dispersibility and sedimentation behavior.

Graphite contains numerous dangling bonds to which functional groups can easily attach. When graphite is applied as a stabilization layer on the silicon anode material of the present disclosure, these functional groups adsorbed onto the surface and dangling bonds of graphite can attract dissolved cations from the electrolyte, thereby promoting lithium-ion diffusion into the silicon particles. Moreover, such functional groups can facilitate electrochemically reversible reactions at the silicon particle surface. In addition, silicon particles coated with graphite exhibit improved dispersibility within a graphite-based anode slurry.

To improve the battery capacity of graphite-based anodes by incorporating silicon particles, it is important to understand the lithiation and delithiation mechanisms of both graphite and silicon. Lithiation of graphite involves lithium ions being intercalated between graphite layers, whereas lithiation of silicon is a process of alloy formation, leading to a fundamentally different mechanism. For example, as reported by Jiang et al. (J. Electrochem. Soc., 2022, 169, 020568), in a system where graphite and silicon are blended, lithiation of graphite occurs at lower voltages, while lithiation of silicon begins as an alloying process that proceeds regardless of voltage, and the silicon reacts more rapidly with surrounding electrolytes during electrochemical cycling. Delithiation, conversely, tends to occur first in silicon and later in graphite.

The graphite used in the stabilization layer of the present disclosure may include natural graphite and artificial graphite. Natural graphite, which is mined from mineral sources, tends to exhibit slightly higher graphitization and lithium-ion storage capacity compared to artificial graphite. However, natural graphite consists of stacked 2D graphene layers into which lithium ions are inserted via the edge planes. This structure results in slower charging rates at high Crates compared to artificial graphite. Furthermore, edge sites are more reactive with electrolytes and tend to delaminate or degrade over repeated expansion and contraction, leading to shorter cycle life. Artificial graphite, on the other hand, is produced by graphitizing needle coke, pitch, or similar precursors at approximately 3000°C in an electric furnace. It exhibits a more stable crystal structure during repeated cycling, faster lithium-ion diffusion pathways due to its 3D morphology, lower volume change, and longer cycle life. Its drawback is that the theoretical capacity is slightly lower than that of natural graphite.

While graphite is generally considered to have higher bulk electrical conductivity than activated carbon, the actual conductivity of anode materials depends on inter-particle contact and particle size when used in electrode formulations. That is, the electrical conductivity of the electrode varies with pressing pressure and compaction density. Therefore, assuming equal particle size, the practical conductivity difference between graphite, which relies primarily on edge-plane conduction, and activated carbon, which permits electron flow in all directions at the particle surface, is not considered to be significant.

In addition to graphite and activated carbon, fluorides, phosphides, hydroxides, iodides, nitrates, and various organic acid salts such as acetates, citrates, and tartrates may also be used in the stabilization layer of the present disclosure. These materials can react with lithium in the electrolyte to form lithium compounds that exhibit higher electrical conductivity than oxides, thereby improving charging rate and initial coulombic efficiency. Specifically, the fluorides useful in the present disclosure may include one or more selected from sodium fluoride, potassium fluoride, lithium bifluoride (LiHF₂), magnesium fluoride (MgF₂), calcium fluoride (CaF₂), aluminum fluoride (AlF₃), sodium hexafluorosilicate (Na₂SiF₆), potassium hexafluorosilicate (K₂SiF₆), magnesium hexafluorosilicate (MgSiF₆). The phosphides may include: phosphoric acid; pyrophosphates such as disodium pyrophosphate and sodium pyrophosphate; polyphosphates such as Kurrol's salt and Maddrell's salt; metaphosphates such as sodium metaphosphate, potassium metaphosphate, or potassium glycerophosphate; hypophosphates such as potassium phosphate or calcium phosphate; hexafluorophosphoric acid; nickel phosphide (Ni₂P); phosphorus pentasulfide (P₂S₅); and trisodium thiophosphate (Na₃PS₄) alone or in combination. The hydroxides may include sodium hydroxide, lithium hydroxide, magnesium hydroxide, barium hydroxide, and cesium hydroxide. The iodides may include sodium iodide, potassium iodide, hydrogen iodide, iodine fluoride, iodates. The nitrates may include sodium nitrate, potassium nitrate, calcium nitrate, ferric nitrate, magnesium nitrate, barium nitrate, ammonium nitrate, and silver nitrate. The organic acid salts may include acetates such as sodium acetate, manganese acetate, cerium acetate, cellulose acetate, and vinyl acetate. The citrates may include magnesium citrate, sodium citrate, and calcium citrate. The tartrates may include tartaric acid, monopotassium tartrate, sodium tartrate, potassium sodium tartrate, ammonium tartrate, and potassium tartrate. Other organic acids or derivatives may include carboxylic acids, sulfinic acids, sulfonic acids, phenol, thiophenol, imides, oximes, enols, sulfonamides, nitro compounds, oxalic acid, fumaric acid, palmitic acid, lactic acid, malic acid, butyric acid, formic acid, succinic acid, glycine acid, nicotinic acid, citric acid, benzoic acid, glacial acetic acid, salicylic acid, acetylsalicylic acid, ascorbic acid, coumaric acid, propionic acid, and sorbic acid.

To enhance the electrical conductivity of the stabilization layer, it is preferable to apply the stabilization layer uniformly and thinly. Additionally, the incorporation of conductive additives to the morphologically zero-dimensional particulate anode material can help maintain interparticle contact even after volume expansion. Examples of conductive additives include: one-dimensional conductive materials such as carbon fibers, carbon nanotubes, and boron nitride nanotubes; and two-dimensional conductive networks such as graphene, MXenes (transition metal carbides, carbonitrides, or nitrides), TMDs (transition metal dichalcogenides), silicene, germanene, stanene, phosphorene, and hexagonal boron nitride (h-BN).

The anode for a secondary battery according to the present disclosure includes the above-described silicon composite. More specifically, the anode may include: the silicon composite, a conductive material, and an electrolyte.

The conductive material may be a carbon nanotube, and may be included in an amount of 0.2 to 10 % by weight relative to the silicon composite. The amount of conductive material may be adjusted proportionally based on the amount of silicon composite used.

The electrolyte additive may be a carbonate ester, including at least one of fluoroethylene carbonate (FEC), vinylene carbonate (VC), polyethylene carbonate (PEC). The electrolyte additive may be included in an amount of 2 to 8 % by weight based on the total weight of the electrolyte.

The following specific examples are provided to illustrate the present disclosure more concretely. However, these examples are merely intended to aid in understanding the present disclosure and are not intended to limit or restrict the scope of the present disclosure in any way. Furthermore, the features, structures, and effects exemplified in each of the following examples may be combined with or modified for other embodiments by those skilled in the art to which the present disclosure pertains. Therefore, such combinations and modifications should also be interpreted as falling within the scope of the present disclosure.

Although the following description is focused on the examples, it is to be understood that this is provided merely for illustration and not for limitation. Those skilled in the art will recognize that various modifications and applications not specifically described herein may be made without departing from the essential characteristics of the present disclosure. For instance, each component or element specifically described in the examples may be modified in its form or structure. Any such differences relating to modifications and applications are also to be interpreted as being included within the scope of the present disclosure as defined by the appended claims.

### EXAMPLES

In the battery tests according to the embodiments of the present disclosure, metallurgical-grade silicon particles with a purity of 98% (reagent grade) and a 100-mesh size were used. The particles were pulverized using a 250mL planetary ball mill. The first milling was performed at 150 to 350rpm for 10% to 25% of the total milling time. The second milling was performed at 300 to 550rpm, resulting in particles with a Gaussian distribution ranging from 5 to 2,000 nm size, and an average diameter of 20 to 250nm.

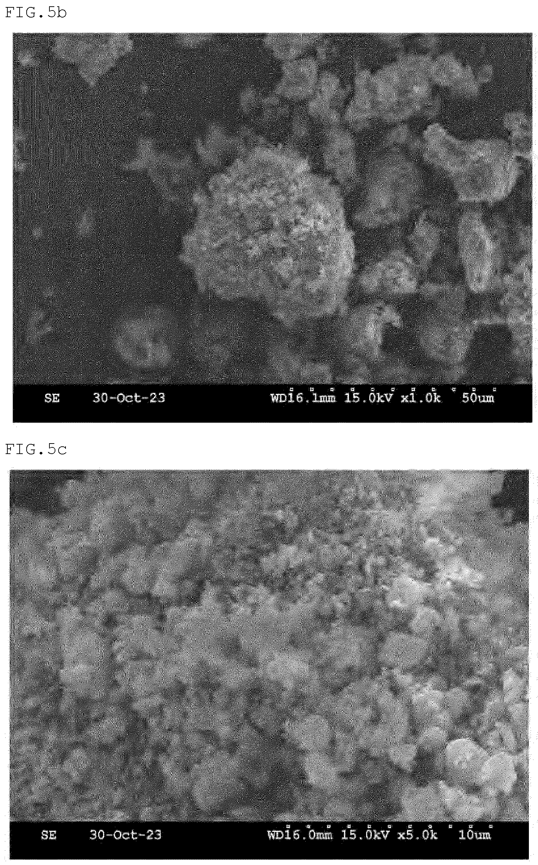

FIG. 4 shows particle images of Example 2 observed at various magnifications, and FIG. 5 shows particle images of Example 7 under the same conditions.

As calculated by Scherrer equation on the basis of the height and width ratios of XRD analysis peaks, the practical grain distributions of Examples 2 and 7 were as follows: 1.3 to 2.8 % by volume for 8 to 15 nm grains; 0.3 to 4.5 % by weight for 20 to 35nm grains; 50.1 to 91.6 % by volume for 40 to 65nm grains; 3.9 to 39.8 % by volume for 70 to 100nm grains; and 0 to 8.8 % by volume 105 to 150nm grains. From the distribution, it was determined that the silicon grain included 10 to 35nm grains at 1 to 10 % by volume, greater than 35 to 65nm grains at 45 to 95 % by volume, greater than 65 to 100nm grains at 3 to 45 % by volume, and greater than 100nm grains at 0 to 15 % by volume. The majority of the grains were in the 40 to 100nm range, and the average grain size in Example 2 was calculated to be 45.4 nm.

The particles were placed in a stainless steel vessel to which a 34.5 % concentration aqueous solution of reagent-grade hydrogen peroxide or a 60 % reagent-grade nitric acid solution was then added in an amount of 32 to 41 % by weight relative to the silicon powder to immerse the silicon powder in a paste state. Subsequent to the secondary milling, the mixture underwent additional milling or oven drying at 80 to 150°C. The resulting silicon paste with a buffer layer formed was subsequently remilled using the same 250mL planetary mill. For the stabilization layer, a reagent-grade activated carbon powder with impurity limits of 0.3mL or less of chloride and 0.5mL or less of sulfate (SO₄²⁻) was used. As for graphite, spherical artificial graphite (MCMB) with a D50 average particle size of 17.6 micrometers was used. The fluoride additive was reagent-grade sodium fluoride (NaF) with 97% or higher purity.

Table 2 below compares the battery test results of conventional graphite, silicon compounds, nano-silicon anode materials, and the silicon anode material of the present disclosure. The "5% converted discharge capacity" refers to the capacity recalculated to 5% by weight silicon content in the anode material, based on a graphite baseline of 350mAh/g. This allows a relative comparison of battery capacity depending on silicon content, thereby providing insight into the efficiency of silicon.

In Example 1, the above-described metallurgical-grade silicon particles were subjected to first milling at 250 rpm for 30 minutes, followed by second milling at 450 rpm for 2 hours. A hydrogen peroxide aqueous solution was added in an amount of 40 % by weight (hereinafter the same), that is, equivalent to 0.12 mole, relative to the silicon, to convert the mixture into a paste. This paste was then subjected to additional milling at 450rpm for 2 hours to obtain silicon particles with a buffer layer formed thereon. Subsequently, 8.6 % by weight of activated carbon was added, and milled at 400rpm for 1 hour to form a stabilization layer on the silicon particles. An anode material was prepared by blending 93 % by weight of spherical artificial graphite (MCMB) containing 5 % by weight of the prepared silicon particles therein with 2 % by weight acetylene black as a conductive material, 2.5 % by weight of carboxymethyl cellulose (CMC), and 2.5 % by weight of styrene-butadiene rubber (SBR) as a binder. Distilled water was added in a 1:1 ratio by weight to the anode material and the mixture was stirred to form an anode slurry. The slurry was coated onto copper foil and dried to fabricate the anode. The electrolyte consisted of a mixture of ethylene carbonate (EC), ethyl methyl carbonate (EMC), and diethyl carbonate (DEC) at a volume ratio of 3:4:3, with 1mol/L LiPF₆ dissolved in the mixed solvent. A lithium foil was used as the cathode, and the electrochemical performance was evaluated using 2032-type coin half-cells.

In Example 2, the buffer layer-coated silicon particles from Example 1 were added with 8.6 % by weight of activated carbon and milled at 400rpm for 1 hour. Then, an additional 14.2 % by weight of activated carbon was added and milled at 450 rpm for 1 hour. As a result, the silicon particles were coated with a total of 22.8 % by weight of activated carbon as a stabilization layer. The silicon particles were incorporated into the anode at 5 % by weight, and all other conditions for battery performance tests were same as in Example 1.

FIG. 6 shows the XRD analysis results of the silicon particles coated with buffer and stabilization layers from Example 1 (FIG. 6a) and Example 2 (FIG. 6b), which were tested using different instruments.

In Example 3, the same buffer layer-coated silicon particles from Example 1 were added with 8.6 % by weight of activated carbon and milled at 400rpm for 1 hour. Then, 9.3 % by weight of artificial graphite (MCMB) was added and milled at 350rpm for 1 hour, resulting in a total carbonaceous coating of 17.9 % by weight as a stabilization layer on the silicon particles. The coated silicon particles were used at 5 % by weight in an anode material, and the remaining composition for battery performance tests was the same as in Example 1.

In Example 4, metallurgical-grade silicon particles were first milled at 300rpm for 30 minutes, followed by second milling at 450rpm for 2 hours. A hydrogen peroxide aqueous solution was added in an amount of 41 % by weight, that is, equivalent to 0.12 mole, relative to silicon, and converted into a paste, which was milled again at 450rpm for 2 hours to obtain silicon particles with a buffer layer formed thereon. The silicon particles were added with 8.0 % by weight of activated carbon and milled at 400rpm for 1 hour, and 30.6 % by weight of sodium fluoride (NaF) was added and milled at 400 rpm for 30 minutes to apply the stabilization layer to silicon particles which were then used at 5 % by weight in the anode, with the other conditions for battery performance tests being identical to Example 1.

In Example 5, metallurgical-grade silicon particles were first milled at 300rpm for 30 minutes, followed by second milling at 450rpm for 2 hours. A hydrogen peroxide aqueous solution was added at 32 % by weight, that is, equivalent to 0.09 mole, relative to silicon to form a paste, which was then milled for 30 minutes at 450 rpm, dried in an oven at 150°C for 1 hour, and finally remilled at 200 rpm for 2 minutes to obtain silicon particles with a buffer layer formed thereon. Next, 13.5 % by weight of activated carbon was added to the silicon particles which were then milled at 400 rpm for 30 minutes to form the stabilization layer. These silicon particles were used at 5 % by weight in the anode, with the other conditions for battery performance tests being the same as in Example 1.

In Example 6, the silicon particles with a buffer layer formed thereon, obtained in Example 5, were evenly spread on a glass Petri dish and subjected to 405nm UV irradiation for 6 hours to induce further oxidation. Then, 13.7 % by weight of activated carbon was added and milled at 400 rpm for 1 hour to apply a stabilization layer to the silicon particles. The silicon particles were used at 5 % by weight in the anode, and all other components for battery performance tests were configured identically to those in Example 1.

In Example 7, metallurgical-grade silicon particles were primarily milled at 300rpm for 40 minutes and secondarily at 450 rpm for 1 hour. A paste was prepared by adding 32 % by weight of hydrogen peroxide aqueous solution and 3 % by weight of nitric acid as oxidizing agents, that is, 0.12 mole and 0.04 mole, respectively, relative to silicon. After additional milling at 450 rpm for 1 hour, the paste was dried in an oven at 150°C for 1 hour and subjected to an additional milling at 350rpm for 10 minutes to obtain silicon particles with a buffer layer formed thereon. Subsequently, the silicon particles coated with the buffer layer were added with 18.8 % by weight of artificial graphite (MCMB) and milled at 350rpm for 1 hour to form the stabilization layer. The prepared silicon particles were used at 5 % by weight in the anode, and the remaining conditions for battery performance testes were the same as in Example 1.

In Example 8, 90 % by weight of artificial graphite (MCMB) containing 10 % by weight of the silicon particles coated with buffer and stabilization layers obtained in in Example 1 was mixed with 2 % by weight of carboxymethyl cellulose (CMC) and 4 % by weight of styrene butadiene rubber (SBR) as binders. Additionally, carbon black Super P was added alone as a conductive material in an amount of 4 % to the anode in Example 8-1 and 3% of Super P and 1% of single wall carbon nano-tube were added as conductive materials to enhance conductivity in Example 8-2. Distilled water was added in the same weight as that of the mixture to prepare the slurry.

In Example 8-1, after fabrication of the battery, a solution of one mole of lithium hexafluorphosphate (LiPF₆) in one liter of a mixture of 1:1 volume ratio of ethylene carbonate (EC) and diethyl carbonate (DEC) was filled as a base electrolyte, and battery performance test results are shown in FIG. 7a as the black dashed line.

In Example 8-2, 5 % by weight of FEC was added to the base electrolyte to improve electrolyte stability. Battery performance test result is shown as the green dashed line in FIG. 7a. In the test, a 2032-type coin half-cell was fabricated with lithium foil as the cathode. In FIG. 7a, the purple dashed line represents the reference trend line for conventional graphite anode. In Fig. 7a, the blue dashed line shows results from using carbon nanotube only as a conductive additive. The red dashed line shows results from using only FEC in the electrolyte.

In Example 8-1, increasing the silicon content to 10% in the anode resulted in a decrease in capacity retention compared to the 5% case. In contrast, Example 8-2 demonstrates that by enhancing conductivity with carbon nanotubes and stabilizing the electrolyte with FEC, the capacity retention of the silicon particles was maintained even at 10% loading. This confirms that electronic connectivity between silicon and graphite particles and electrolyte stability are critical to retaining battery capacity, even when the buffer layer quality is constant.

In Example 9, artificial graphite (MCMB) containing 10 % by weight of the silicon particles coated with buffer and stabilization layers obtained in Example 2 was used at 90 % by weight in the anode. Binders and electrolyte configuration were the same as in Example 8.

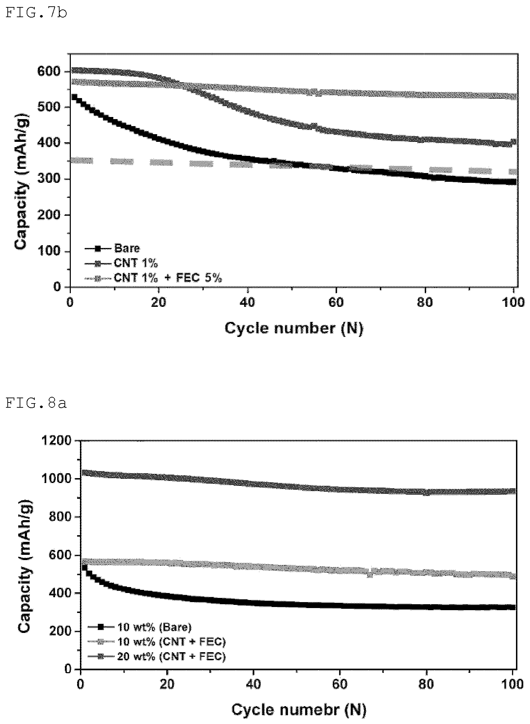

In Example 9-1, the carbon black Super P was added in an amount of 4 % by weight as a sole conductive additive. The test result is shown in FIG. 7b as the black dashed line.

In Example 9-2, Super P and single-wall carbon nanotubes were added in amounts of 3 % by weight and 1 % by weight as a conductive additive, respectively, and FEC was additionally added in an amount of 5 % to the base electrolyte. The battery performance test result is shown in FIG. 7b as the green dashed line.

In FIG. 7b, the purple dashed line accounts for capacity changes of the graphite-only anode as a comparison while the blue dashed line accounts for capacity changes of the anode which were added with 1 % of carbon nanotubes alone.

In the experiments, a 2032-type half-cell was fabricated with lithium foil as the cathode and tested.

In Example 9-1, when only the content of silicon particles was increased, the capacity retention rate of the battery decreased. However, in Example 9-2, despite the increase in silicon content to 10%, capacity retention was maintained due to enhanced conductivity provided by carbon nanotubes and improved electrolyte stability from the addition of FEC.

In Example 10-1, artificial graphite (MCMB) in which the silicon particles coated with the buffer layer and stabilization layer of Example 1 were mixed in an amount of 20 % accounted for 90% of the anode composition. The binder and electrolyte were configured identically to those in Example 8-2. As conductive additives, 2% Super P carbon black and 2% single-walled carbon nanotubes were included to enhance conductivity. The half-cell test results for Example 10-1 are indicated by the blue line in FIG. 8a, while the results for Example 8-2, which used 10% silicon particles along with carbon nanotubes and FEC, are indicated by the red line, showing that the battery capacity increases in proportion to the silicon content. The black line indicates the capacity variation when 10% silicon particles were used in Example 8-1.

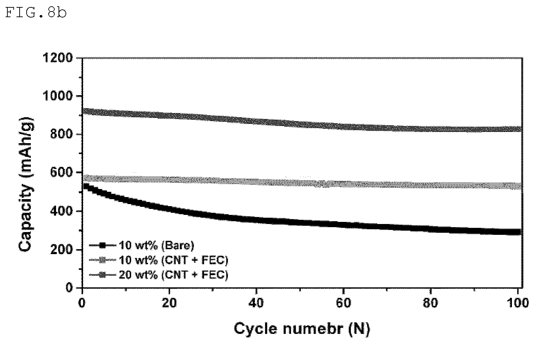

In Example 10-2, artificial graphite (MCMB) in which the silicon particles coated with buffer layer and stabilization layer of Example 2 were mixed in an amount of 20 % accounted for 90% of the anode composition. The binder and electrolyte were configured identically to Example 9-2. As conductive additives, 2% Super P and 2% single-walled carbon nanotubes were used, and 5% FEC was added to the base electrolyte. The battery test results are shown as a blue line in FIG. 8b, while the red line shows the results for Example 9-2, in which 10% silicon particles were used with single-walled carbon nanotubes and FEC, confirming the trend that battery capacity increases in proportion to the silicon content. The black line represents the capacity change in Example 9-1, in which 10% silicon particles were used. In these experiments, lithium foil was used as the counter electrode, and 2032-type half-cells were fabricated and tested.

In the present invention, carbon nanotubes added as conductive additives serve to maintain the connection between silicon and graphite particles, particularly when the silicon particle content is 10% or more. Therefore, the amount of carbon nanotubes is increased proportionally to the silicon content. Below 0.2 % by weight in the electrode composition, the effect is negligible, while exceeding 10% significantly increases manufacturing costs, and thus is limited. Fluoroethylene carbonate (FEC), added as a carbonate ester to the electrolyte, has limited effect below 2 % by weight of the total electrolyte. When added in excess of 8 % by weight, it reduces the initial discharge capacity and increases electrolyte viscosity, thereby lowering ion conductivity, and is thus restricted. In addition to FEC, other alternatives such as vinylene carbonate (VC) and vinylethylene carbonate (VEC) may be used as substitutes.

Comparative Example 1 was configured identically to the Examples of the present disclosure, except that only the composition was changed. The anode was prepared by mixing 93% by weight of artificial graphite (MCMB), 2% by weight of acetylene black as a conductive material, and 2.5% by weight of CMC, and 2.5% by weight of SBR as a binder. All other conditions for battery performance tests were the same as in Example 1. The initial discharge capacity of the artificial graphite anode was 309-312mAh/g, which is approximately one-third lower than that of the anode containing 5% by weight of the silicon composite of the present disclosure.

Comparative Example 2 refers to a battery performance test result disclosed in PCT International Patent WO2020256395, in which 10% by weight of magnesium silicate and silicon composite oxide was added to natural graphite. When converted to a 5% by weight equivalent, the initial discharge capacity is 217-232mAh/g, which is only about half the capacity of the present disclosure.

Comparative Example 3 pertains to the study reported by Sim et al. (Adv. Mater., 25, 2013), in which battery performance tests were conducted with an anode containing 70% by weight of silicon nanowires. When recalculated for 5% by weight silicon content, the initial discharge capacity ranges from 46 to 163mAh/g, which is less than one-tenth to one-half the capacity of the present disclosure.

Comparative Example 4 pertains to the study reported by Xiong et al. (RSC Adv., 11, 2021, p.7801), in which battery performance tests were conducted when 15 % of SiOₓ was contained. When recalculated for 5% by weight silicon content, the initial discharge capacity is 208-209mAh/g, which is less than half the value of the present disclosure.

Comparative Example 5 pertains to the study reported by Yang et al. (Nature Scientific Reports, 5, 2015, 10908), in which battery performance tests were conducted for the battery including 70% of the silicon anode material having average 100 nm nano-silicon particles coated with silicon oxide and a carbonized layer. When recalculated for 5% by weight silicon content, the initial discharge capacity is 45-150mAh/g, which is 1/10-1/2 of the value of the present disclosure.

Comparative Example 6 pertains to the study reported by Wang et al (Microporous and Mesoporous Materials 307, 2020, 110480), in which battery performance tests were conducted for the anode containing 75 % of the SiOₓ composite having a carbonized layer formed thereon. When recalculated for 5% by weight silicon content, the initial discharge capacity is 45-53mAh/g, which is approximately 1/10 the value of the present disclosure.

In Comparative Example 7, battery performance tests were conducted for an anode that contained 93% of artificial graphite (MCMB) mixed with 5 % of silicon oxide (SiO) having an average diameter of about 12 micrometers, 2% of acetylene black as a conductive material, and 2.5 % of CMC and 2.5 % of SBR as binders. The initial discharge capacity was 400-412mAh/g, slightly lower than that of the present disclosure. However, the manufacturing cost is more than twice as high as that of the embodiments of the present disclosure.

**TABLE 2**

| Specimen | | Initial charge capacity (mAh/g) | Initial discharge capacity (mAh/g) | Discharge capacity recalcu lated for 5 % Si (mAh/g) | Initial coulomb ic efficie ncy (%) | Capacity retentio n (%) | No. of cycles |
|---|---|---|---|---|---|---|---|
| EX. 1 | 1 | 493 | 437 | 437 | 88.6 | 83 | 80 |
| | 2 | 495 | 437 | 437 | 88.3 | 84 | 88 |
| EX. 2 | 1 | 499 | 436 | 436 | 87.3 | 86 | 75 |
| | 2 | 487 | 436 | 436 | 89.5 | 87 | 80 |
| EX. 3 | 1 | 493 | 435 | 435 | 88.2 | 82 | 90 |
| | 2 | 497 | 435 | 435 | 87.5 | 80 | |
| EX. 4 | 1 | 478 | 417 | 417 | 87.2 | 81 | 90 |
| | 2 | 473 | 421 | 421 | 89.0 | 83 | |
| EX. 5 | 1 | 532 | 464 | 464 | 87.2 | 78 | 100 |
| | 2 | 491 | 430 | 430 | 87.5 | 78 | |
| EX. 6 | 1 | 528 | 465 | 465 | 88.0 | 78 | 90 |
| | 2 | 577 | 504 | 504 | 87.3 | 81 | |
| EX. 7 | 1 | 513 | 445 | 445 | 86.7 | 73 | 100 |
| | 2 | 516 | 444 | 444 | 86.0 | 80 | |
| EX. 8 | 1 | 535 | 507 | 429 | 94.8 | 61 | 100 |
| | 2 | 576 | 567 | 459 | 98.4 | 89 | 100 |
| EX. 9 | 1 | 548 | 528 | 439 | 96.4 | 50 | 100 |
| | 2 | 581 | 572 | 461 | 98.5 | 91 | 100 |
| EX. 10 | 1 | 1053 | 1032 | 521 | 98.0 | 91 | 100 |
| | 2 | 940 | 921 | 493 | 98.0 | 90 | 100 |
| C. Ex. 1 | 1 | 340 | 312 | - | 91.8 | 100 | 100 |
| | 2 | 338 | 309 | - | 91.4 | 100 | 100 |
| C. Ex. 2 | 1 | 515 | 437 | 219 | 84. 9 | 87 | 50 |
| | 2 | 510 | 454 | 227 | 89.0 | 92 | |
| | 3 | 503 | 463 | 232 | 92.0 | 86 | |
| | 4 | 505 | 434 | 217 | 85.9 | 90 | |
| | 5 | 502 | 450 | 225 | 89. 6 | 87 | |
| C. Ex. 3 | Diameter 7nm | 2117 | 2279 | 163 | 92.9 | 83 | 50 |
| | Diameter 15nm | 774 | 645 | 46 | 83.3 | 95 | |
| C. Ex. 4 | SBR-1 | 523.7 | 624.9 | 208 | 83.8 | 96.4 | 35 |
| | SBR-2 | 523.9 | 626.5 | 209 | 83.6 | 95.8 | |
| C. Ex. 5 | Porous Si@Gr | - | 1200 | 86 | - | 89.1 | 200 |
| | Si/CNT/C | - | 2100 | 150 | - | 95.5 | 100 |
| | Si-SiO2 Nanowire | - | 1910 | 136 | - | 95.0 | 100 |
| | Si@C hollow core | - | 625 | 45 | - | 76.8 | 40 |
| | Si/SiO2/C | - | 956 | 68 | - | 83.0 | 430 |
| C. Ex. 6 | 0@C | - | 792 | 53 | 66.1 | 13.9 | 150 |
| | 2@C | - | 782 | 52 | 65.2 | 28.1 | |
| | 6@C | - | 761 | 51 | 63.5 | 70.3 | |
| | 10@C | - | 681 | 45 | 56.6 | 54.3 | |
| C. Ex. 7 | 1 | 406 | 412 | 412 | 98.5 | 86 | 100 |
| | 2 | 409 | 400 | 400 | 97.8 | 80 | |

## Claims

1. A silicon composite comprising:
silicon particles; and
a non-stoichiometric buffer layer coated on the surface of the silicon particles,
wherein the buffer layer is coated on the surface of the silicon particles by chemically treating the surface with an oxidizing agent added in a molar ratio of 0.05 to 0.2 mole per 1 mole of silicon, and comprises a solid electrolyte interphase (SEI) layer comprising at least one of Li₂Si₂O₅, Li₄SiO₄, and Li₂SiO₃ or a mixture thereof formed by prelithiation, an initial formation process, or initial charge/discharge, and
wherein an oxide of the SEI layer is formed preferentially over a fluorides.

2. The silicon composite of claim 1, wherein the buffer layer comprises any one of a silicon oxide thin film, a silicon nitride thin film, and a composite thereof.

3. The silicon composite of claim 1, wherein the buffer layer comprises any one of a non-stoichiometric silicon oxide thin film having the chemical formula SiOₓ (0.5 < x < 1.2), a non-stoichiometric silicon nitride thin film having the chemical formula SiNₓ (0.1 ≤ x < 1), and a composite thereof.

4. The silicon composite of claim 1, wherein the buffer layer comprises silicon monoxide (SiO).

5. The silicon composite of claim 1, wherein silicon particles having an average particle size of 10 to 1000 nm account for 85% or more of the total silicon particles, and have an average diameter or thickness of 20 to 250 nm.

6. The silicon composite of claim 1, wherein the silicon grains are distributed to account for 1 to 10% by volume for grains with a size of 10 to 35 nm, 45 to 95 % by volume for grains with a size of greater than 35 to 65 nm, 3 to 45% by volume of grains with a size of greater than 65 to 100 nm, and 0 to 15% by volume of grains with a size greater than 100 nm.

7. The silicon composite of claim 1, further comprising a stabilization layer coated on the buffer layer.

8. The silicon composite of claim 7, wherein the stabilization layer comprises at least one selected from the group consisting of carbon-based materials, fluorides, phosphides, hydroxides, iodides, nitrates, and organic acids.

9. A method for manufacturing a silicon composite, the method comprising the steps of:
pulverizing silicon particles;
forming a buffer layer on the surface of the silicon particles; and
forming a stabilization layer on the buffer layer,
wherein the step of forming a buffer layer is carried out by adding an oxidizing agent to the silicon particles to form a non-stoichiometric silicon oxide thin film and the step of forming a stabilization layer is carried out by adding a stabilization layer forming material after performing the step of forming a buffer layer.

10. The method of claim 9, wherein the step of pulverizing the silicon particles comprises performing milling.

11. The method of claim 9, wherein the step of forming a buffer layer comprises chemically treating the surface of the silicon particles.

12. The method of claim 11, wherein the chemical surface treatment is carried out by adding an oxidizing agent in an amount of 0.05 mole to 0.20 mole per 1 mole of silicon.

13. The method of claim 12, wherein the oxidizing agent comprises at least one selected from the group consisting of active oxygen, nitrogen, boron, phosphorus, sulfur, halogen elements, and acidic functional groups.

14. The method of claim 9, wherein the stabilization layer forming material comprises at least one selected from the group consisting of carbon-based materials, fluorides, phosphides, hydroxides, iodides, nitrates, and organic acids, and is added in an amount of 4 to 45% by weight relative to the silicon grains and mechanically bonded to the buffer layer.

15. An anode for a secondary battery, the anode comprising the silicon composite of any one of claims 1 and 4 to 7.

16. An anode for a secondary battery, the anode comprising:
the silicon composite according to any one of claims 1 and 4 to 7;
a conductive material comprising carbon nanotubes; and
an electrolyte comprising a carbonate ester.

17. A secondary battery, comprising the anode of any one of claims 15 and 16.
